(19) Europäisches Patentamt
European Patent Office
Office européen des brevets

(11) Veröffentlichungsnummer: **0 432 416 B1**

# (12) EUROPÄISCHE PATENTSCHRIFT

(45) Veröffentlichungstag der Patentschrift: **17.05.95**

(51) Int. Cl.[6]: **C08K 5/38**, C08L 21/00

(21) Anmeldenummer: **90120235.8**

(22) Anmeldetag: **22.10.90**

## (54) Verfahren zur Vulkanisation von Kautschuk mit einem Vulkanisiersystem auf der Basis von Schwefel und Dithiocarbonsäuren bzw. deren Salze.

(30) Priorität: **12.12.89 DE 3941001**

(43) Veröffentlichungstag der Anmeldung:
**19.06.91 Patentblatt 91/25**

(45) Bekanntmachung des Hinweises auf die Patenterteilung:
**17.05.95 Patentblatt 95/20**

(84) Benannte Vertragsstaaten:
**AT BE CH DE ES FR GB IT LI LU NL SE**

(56) Entgegenhaltungen:
**BE-A- 589 249**
**DE-A- 2 102 208**

(73) Patentinhaber: **HÜLS AKTIENGESELLSCHAFT**

**D-45764 Marl (DE)**

(72) Erfinder: **Hörpel, Gerhard, Dr.**
**Lerchenhain 84**
**W-4405 Nottuln (DE)**
Erfinder: **Haag, Horst Günter, Dr.**
**Wellerfeldweg 219**
**W-4307 Marl (DE)**
Erfinder: **Nordsiek, Karl-Heinz, Dr.**
**Neumarkstrasse 4**
**W-4370 Marl (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft ein Verfahren zur Vulkanisation von Kautschuken mit einem Vulkanisiersystem auf der Basis von Schwefel und neuen Vulkanisationsbeschleunigern, bestehend aus Dithiocarbonsäuren bzw. deren Salze ggf. in Gegenwart weiterer üblicher Zuschlagstoffe. Das erfindungsgemäße Verfahren erlaubt die Herstellung von Vulkanisaten unter Vermeidung cancerogener Nitrosamine.

Sowohl die neue Gefahrstoffverordnung als auch die neue TRGS 522 (Technische Regeln für Gefahrstoffe) "Nitrosamine" stellt die Gummiinudstrie - hier:Hersteller und Verarbeiter - vor die Aufgabe, Nitrosaminkonzentrationen zu reduzieren. Einigkeit besteht darin, daß dies nur über die Vermeidung potentieller Nitrosaminquellen zu schaffen ist. Potentielle Nitrosaminquellen sind jedoch u. a. die wichtigsten gebräuchlichen Vulkanisationsbeschleuniger (siehe hierzu: Kautschuk und Gummi - Kunststoffe 42. Jahrgang, Nr. 1/89, S. 16 ff.).

So wurden als Vulkanisationsbeschleuniger in der Vergangenheit vielfach Alkali- oder Ammoniumdialkyldithiocarbamate oder auch deren Dimere, die Thiurame, eingesetzt, die im Verlaufe des Vulkanisationsprozesses u. a. zu Aminen zerfallen, die ihrerseits mit dem ubiquitär vorhandenen $(NO)_x$ zu Nitrosaminen reagieren (zum Mechanismus s. o. a. Literatur). Die Nitrosaminbildung wird noch verstärkt, wenn über das o. a. $(NO)_x$ hinaus zusätzlich noch NO-Quellen in Form NO-haltiger Zuschlagstoffe (z. B. Natriumnitrit) vorhanden sind, die im Verlaufe des Kautschukherstellungs- als auch Vulkanisationsprozesses eingebracht werden. Diese Nitrosamine, die nach heutiger Erkenntnis als Gesundheitsrisiko angesehen werden müssen (vgl. Umschau 1985 (1), 24), lassen sich zum einen in der Umgebungsluft, zum anderen aber auch im Gummi nachweisen.

Stickstoff-freie Vulkanisationsbeschleuniger sind z. B. in Form der Xanthogenate und Dithiophosphate bekannt. Xanthogenate sind jedoch wenig wirkungsvoll und haben demzufolge auch eine geringe Marktbedeutung. Dithiophopshate verkürzen die Verarbeitungssicherheit vor allem bei Dienkautschuken in unerwünschter Weise, so daß sie daher nur als Spezialbeschleuniger für Ethylen-Propylen-Terpolymere (EPDM-Kautschuke) eingesetzt werden. Eine weitere Klasse häufig angewendeter Beschleuniger sind die Mercaptothiazole, die ebenfalls den Nachteil zu schneller Anvulkanisation, d. h. zu geringer Verarbeitungssicherheit aufweisen.

Ziel der vorliegenden Erfindung ist es somit, ein Verfahren zur Vulkanisation von Kautschuken aufzufinden, das einerseits das Entstehen gesundheitsgefährdender Nitrosamine ausschließt und gleichzeitig die Vulkanisateigenschaften nicht beeinträchtigt.

Es wurde jetzt ein solches Verfahren gefunden. Dieses besteht darin, daß man der Vulkanisationsmischung eine wirksame Menge einer aromatischen Hydroxydithiocarbonsäure bzw. deren Salz der allgemeinen Formel

B - A zusetzt,

wobei B die Bedeutung von

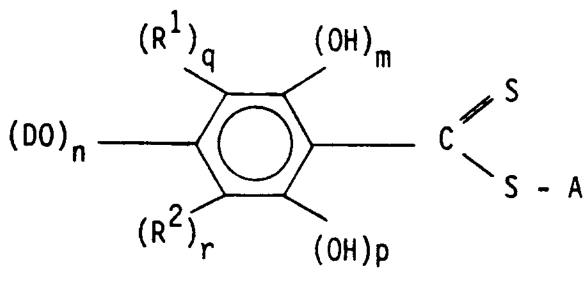

haben soll.

n, m, p, q und r haben die Bedeutung von 0 oder 1 mit der Einschränkung, daß die Summe n + m + p mindestens den Wert 1 haben muß.

$R^1$ und $R^2$ sind gleiche oder unterschiedliche Reste folgender Bedeutung

- Alkylrest mit 1 bis 10 C-Atomen
- Alkylenrest mit 1 bis 10 C-Atomen
- Aralkylrest mit bis zu 15 C-Atomen

D hat die Bedeutung von Wasserstoff- oder Ammonium- oder ein- und zweiwertigen Metallionen,

vorzugsweise Na, K und Zn.

A hat die Bedeutung von B oder Wasserstoff- oder Ammonium- oder ein- und zweiwertigen Metallionen, vorzugsweise Na, K und Zn.

Die Darstellung der erfindungsgemäß verwendeten Dithiocarbonsäuren und ihrer Salze erfolgt üblicherweise durch Dithiocarboxylierung der entsprechenden Phenole in Dimethylformamid oder in Alkoholen. Ein geeignetes Dithiocarboxylierungsmittel ist ein Gemisch aus Schwefelkohlenstoff und Kaliumhydroxyd, ferner Kaliumdithiocarbonat oder Kaliumtrithiocarbonat (siehe Scheithauer, R. Mayer, in A. Senning: Topics in Sulfur Chemistry, Thio- and Dithiocarboxylic Acids and Their Derivatives, Vol. 4, Georg Thieme Verlag, Stuttgart, 1979).

Für das erfindungsgemäße Verfahren kommen als Kautschuke Natur- und Synthesekautschuke infrage. Bevorzugte Synthesekautschuke sind z. B. Styrol-Butadien-Copolymere, Polybutadiene, Polyisoprene, Integralkautschuke (wie in DE-OS 37 10 002, 37 24 871, 38 04 547 beschrieben), Acrylnitril-Butadien-Kautschuke (NBR), Ethylen-Propylen-Terpolymer-Kautschauke (EPDM), Polyoctenylenkautschuke oder deren Verschnitte.

Bezüglich weiterer üblicher Kautschukzusätze wie z. B. Füllstoffe, Weichmacher, Klebrigmacher, Beschleuniger, Aktivatoren, Stearinsäure, Wachse, Alterungs- und Ozonschutzmittel, Treibmittel, Farbstoffe sowie Pigmente gibt es nur die Einschränkung, daß sie nicht als Nitrosaminquellen agieren dürfen.

Die Vulkanisation wird bei Temperaturen zwischen 100 °C und 300 °C, bevorzugt zwischen 120 °C und 240 °C, durchgeführt. Hierfür können alle in der Technik üblichen Vulkanisationsverfahren, wie Pressenheizung, Heizung mit Heißdampf, Heißluft, Salzbad, Fließbett, Ultrahochfrenquenz und Dampfrohr verwendet werden.

Die Verwendung erfindungsgemäßer Substanzen zur Vulkanisation von Kautschuken als Haupt- sowie als Zusatzbeschleuniger ist neu und weist Vorteile in der Vermeidung cancerogener Nitrosamine auf, ohne dabei Einbußen in den Vulkanisations- und Vulkanisateigenschaften zur Folge zu haben. Die mechanischen Eigenschaften der Vulkanisate wie Festigkeit, Modul, Härte, Elastizität und Compression Set gleichen denen herkömmlicher Systeme. Die erfindungsgemäßen Substanzen können somit eine Lücke füllen, die durch die toxikologischen Probleme mit Beschleunigern auf Dithiocarbamatbasis entstanden ist.

Die bei der Ausführung des erfindungsgemäßen Verfahren höhere Dosierung im Vergleich zum Tetramethyl-thiuramdisulfid (TMTD) beispielsweise, die sich zwangsläufig aufgrund der höheren Molmassen erfindungsgemäß verwendeter Beschleuniger ergibt, wird durch das Antioxidanspotential wieder aufgewogen, das in der sterisch gehinderten Phenolstruktur dieser aromatischen Hydroxybenzoldithiocarbonsäuren zusätzlich vorhanden ist. Bei dem erfindungsgemäßen Verfahren erlaubt gerade die Kombination der Antioxidans- und Beschleunigereigenschaft in einer Substanz eine Reduktion von Alterungsschutzmitteln in der Mischung und trägt damit zu einer kostengünstigeren Gestaltung der erfindungsgemäßen Compounds bei.

## Experimenteller Teil

Der technische Fortschritt, der mit den erfindungsgemäß verwendeten Substanzen zu erzielen ist, soll am Beispiel der 4-Hydroxy-3,5-di-t-butylbenzol-dithiocarbonsäure bzw. ihrer Derivate und folgender Basismischung erläutert werden:

| | | |
|---|---|---|
| Kautschuk:<br>Ruß: | BUNA EM 1502 RE<br>CORAX[R] N 330 | 100 phr<br>50 phr |
| Zuschlagstoffe: | Zinkoxid RS<br>Stearinsäure<br>Schwefel | 3 phr<br>1 phr<br>1,75 phr |
| phr = parts per hundred rubber<br>CORAX[R] N 330 ist ein Ruß, der von der Degussa AG, D-6450 Hanau vertrieben wird. | | |

Die Vulkanisationsmischung wird bei 50 °C gewalzt und bei 150 °C vulkanisiert.

Versuchsreihe 1

| Beispiel | | 1.1 | 1.2 | 1.3 |
|---|---|---|---|---|
| Beschleuniger | | DBCS-H | DBCS-K | V-NZ |
| Dosierung | (phr) | 2,3 | 2,6 | 1,0 |
| Monsantorheometer 150 °C | | | | |
| $t_{10}$ | (min) | 2,6 | 0,9 | 10,2 |
| $t_{90}$ | (min) | 16,1 | 3,5 | 25,3 |
| $\Delta t$ | (min) | 13,5 | 2,6 | 15,1 |
| Vulkanisate | | | | |
| Heizzeit 30 min/150 °C | | | | |
| Zugfestigkeit[1)] | (MPa) | 19,7 | 20,3 | 20,9 |
| Bruchdehnung [2)] | (%) | 347 | 329 | 340 |
| Modul bei 300 % [3)] | (MPa) | 14,0 | 15,4 | 16,4 |
| Bleibende Dehnung | (%) | 9 | 9 | 7 |
| Shore-Härte bei 20 °C[4)] | (°C) | 67 | 66 | 67 |
| Rückprl.elast. bei 20 °C[5)] | (%) | 48 | 51 | 49 |
| Alterung in Heißluft | | | | |
| 7 d bei 100 °C | | | | |
| Zugfestigkeit | (MPa) | 12,1 | 13,4 | 10,8 |
| Bruchdehnung | (%) | 183 | 191 | 132 |
| Shore-Härte bei 20 °C | (°) | 71 | 70 | 75 |

Erläuterungen zur Tabelle:

$t_{10}$: Zeit, in der der Kautschuk zu 10 % vulkanisiert ist, Vulkametrie gemäß DIN 53 529

$t_{90}$: Zeit, in der der Kautschuk zu 90 % vulkanisiert ist, Vulkametrie gemäß DIN 53 529

$\Delta t$: $t_{90} - t_{10}$ in Minuten

1): Zugfestigkeit in MPa gemäß DIN 53 504

2): Bruchdehnung in % gemäß DIN 53 504

3): Modul bei 300 % Dehnung nach DIN 53 504

| | |
|---|---|
| 4): | Shore A-Härte bei Raumtemperatur gemäß DIN 53 505 |
| 5): | Rückprallelastizität bei Raumtemperatur gemäß ISO R 1767 |
| V-NZ: | VULKAZIT[R] NZ, ein Vulkanisationsmittel mit der chemischen Bezeichnung Benzothiozyl-2-tert-butyl-sulfenamid, das von der Fa. Bayer AG, D-5090 Leverkusen, vertrieben wird. |
| DBCS-H: | 4-Hydroxy-3,5-di-t-butylbenzol-dithiocarbonsäure |
| DBCS-K: | Biskaliumsalz der 4-Hydroxy-3,5-di-t-butylbenzol-dithiocarbonsäure |
| DBCS-Zn: | Zinksalz der 4-Hydroxy-3,5-di-t-butylbenzol-dithiocarbonsäure |

Versuchsreihe 1 zeigt die außergewöhnliche Steigerung der Vulkanisationsgeschwindigkeit durch DBCS, insbesondere in Form seines Kaliumsalzes, im Vergleich zu Sulfenamidbeschleunigern. Bemerkenswert ist ferner der Beitrag zur Steigerung der Stabilität bei Alterungsprozessen.

Die Versuchsreihe 2 demonstriert die hohe Reaktivität von DBCS und DBKS-K als Zweitbeschleuniger in Kombination mit Sulfenamiden. Die Wirksamkeit von Beschleunigern auf Dithiocarbamatbasis (TMTD) wird erreicht und übertroffen.

Versuchsreihe 2

| Beispiel | | 2.1 | 2.2 | V.3 | 2.3 |
|---|---|---|---|---|---|
| Zusatzbeschleuniger | | DBCS-H | DBCS-K | TMTD | DBCS-Zw |
| Dosierung | (phr) | 2,3 | 2,6 | 0,6 | 1,2 |
| Beschleuniger V-NZ | (phr) | 1,0 | 1,0 | 1,0 | 1,5 |
| | | | | | |
| Monsantorheometer 150 °C | | | | | |
| $t_{10}$ | (min) | 2,1 | 2,6 | 4,6 | 4,3 |
| $t_{90}$ | (min) | 7,8 | 7,4 | 9,5 | 9,1 |
| $\Delta t$ | (min) | 5,7 | 4,8 | 4,9 | 4,8 |
| | | | | | |
| Vulkanisate | | | | | |
| Heizzeit 30 min/150 °C | | | | | |
| Zugfestigkeit[1]) | (MPa) | 20,4 | 19,8 | 18,5 | 21,0 |

| Beispiel | | 2.1 | 2.2 | V.3 | 2.3 |
|---|---|---|---|---|---|
| Zusatzbeschleuniger | | DBCS-H | DBCS-K | TMTD | DBCS-Zw |
| Bruchdehnung 2) | (%) | 334 | 329 | 306 | 342 |
| Modul bei 300 % 3) | (MPa) | 9,3 | 9,2 | 12,0 | 12,8 |
| Bleibende Dehnung | (%) | 6 | 6 | 5 | 6 |
| Shore-Härte bei 20 °C 4) | (°C) | 68 | 70 | 71 | 70 |
| Rückprl.elast. bei 20 °C 5) | (%) | 49 | 51 | 50 | 51 |
| Alterung in Heißluft | | | | | |
| 7 d bei 100 °C | | | | | |
| Zugfestigkeit | (MPa) | 12,8 | 15,3 | 9,8 | 11,5 |
| Bruchdehnung | (%) | 153 | 161 | 122 | 158 |
| Shore-Härte bei 20 °C | (°) | 72 | 73 | 75 | 74 |

Erläuterungen zur Tabelle:

| | |
|---|---|
| $t_{10}$: | Zeit, in der der Kautschuk zu 10 % vulkanisiert ist, Vulkametrie gemäß DIN 53 529 |
| $t_{90}$: | Zeit, in der der Kautschuk zu 90 % vulkanisiert ist, Vulkametrie gemäß DIN 53 529 |
| $\Delta t$: | $t_{90} - t_{10}$ in Minuten |
| 1): | Zugfestigkeit in MPa gemäß DIN 53 504 |
| 2): | Bruchdehnung in % gemäß DIN 53 504 |
| 3): | Modul bei 300 % Dehnung nach DIN 53 504 |
| 4): | Shore A-Härte bei Raumtemperatur gemäß DIN 53 505 |
| 5): | Rückprallelastizität bei Raumtemperatur gemäß ISO R 1767 |
| V-NZ: | VULKAZIT[R] NZ, ein Vulkanisationsmittel mit der chemischen Bezeichnung Benzothiozyl-2-tert-butyl-sulfenamid, das von der Fa. Bayer AG, D-5090 Leverkusen, vertrieben wird. |
| DBCS-H: | 4-Hydroxy-3,5-di-t-butylbenzol-dithiocarbonsäure |
| DBCS-K: | Biskaliumsalz der 4-Hydroxy-3,5-di-t-butylbenzol-dithiocarbonsäure |
| DEBS-Zn: | Zinksalz der 4-Hydroxy-3,5-di-t-butylbenzol-dithiocarbonsäure |
| TMTD: | Tetramethylthiuramdisulfid |

## Patentansprüche

1. Verfahren zur Vulkanisation von Kautschuk mit einem Vulkanisiersystem und üblicher Kautschukzusätze,

dadurch gekennzeichnet,
daß als Vulkanisiersystem Schwefel und eine aromatische Hydroxydithiocarbonsäure bzw. deren Salz der allgemeinen Formel

B - A eingesetzt wird,

wobei B die Bedeutung von

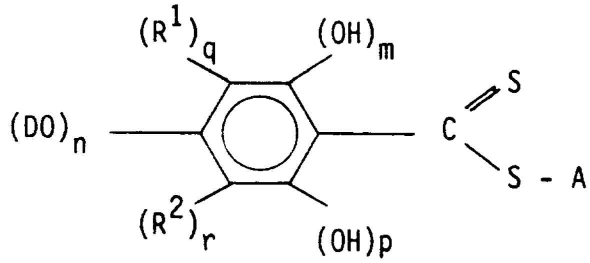

haben soll,
n, m, p, q und r haben die Bedeutung von 0 oder 1 mit der Einschränkung, daß die Summe n + m + p mindestens den Wert 1 haben muß,
$R^1$ und $R^2$ sind gleiche oder unterschiedliche Reste folgender Bedeutung

- Alkylrest mit 1 bis 10 C-Atomen
- Alkylenrest mit 1 bis 10 C-Atomen
- Aralkylrest mit bis zu 15 C-Atomen,

D hat die Bedeutung von Wasserstoff- oder Ammonium- oder ein- und zweiwertigen Metallionen,
A hat die Bedeutung von B oder Wasserstoff- oder Ammonium- oder ein- und zweiwertigen Metallionen, vorzugsweise Na, K und Zn.

**2.** Verfahren nach Anspruch 1,
dadurch gekennzeichnet,
daß die aromatische Hydroxydithiocarbonsäure bzw. deren Salz in einer Menge von 0,1 bis 5,0 phr eingesetzt wird.

## Claims

**1.** A process for the vulcanization of rubber by means of a vulcanization system and conventional rubber additives, characterized in that the vulcanization system employed is sulphur and an aromatic hydroxydithiocarboxylic acid or a salt thereof of the general formula

B - A,

where B is

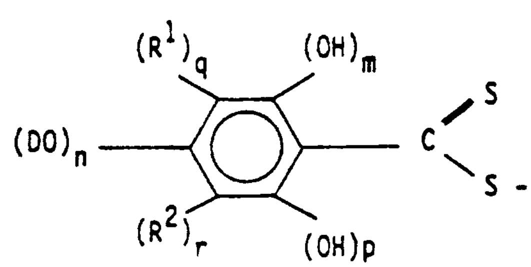

n, m, p, q and r are 0 or 1, with the proviso that the
sum n + m + p must be at least 1, $R^1$ and $R^2$ are identical or different radicals having the following meanings

- alkyl radical having 1 to 10 carbon atoms
- alkylene radical having 1 to 10 carbon atoms
- aralkyl radical having up to 15 carbon atoms,

D is a hydrogen ion or an ammonium ion or a univalent or divalent metal ion,
A is as defined for B or is a hydrogen ion or an ammonium ion or a univalent or divalent metal ion, preferably Na, K or Zn.

**2.** A process according to claim 1, characterized in that the aromatic hydroxydithiocarboxylic acid or salt thereof is employed in an amount of 0.1 to 5.0 phr.

## Revendications

**1.** Procédé pour la vulcanisation de caoutchouc au moyen d'un système de vulcanisation et des additifs usuels du caoutchouc,
caractérisé par le fait que l'on utilise comme système de vulcanisation du soufre et un acide aromatique hydroxydithiocarbonique ou respectivement un des sels de celui-ci de formule générale B - A, dans laquelle B signifie

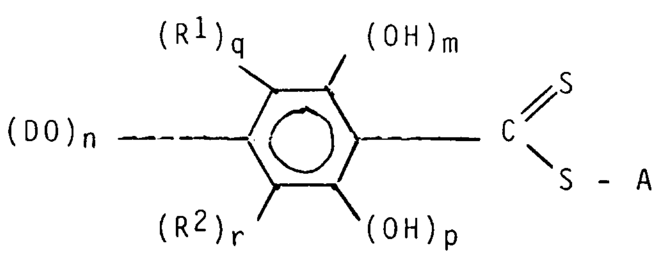

n, m, p, q et r étant égal à 0 ou 1 avec la condition que la somme n + m + p doit être au moins égale à 1,
$R^1$ et $R^2$ sont des radicaux identiques ou différents de signification suivante :

- radical alkyle contenant de 1 à 10 atomes de carbone
- radical alkylène contenant de 1 à 10 atomes de carbone
- radical aralkyle contenant de 1 à 15 atomes de carbone,

D est un ion hydrogène, un ion ammonium ou un ion métallique mono-valent ou bivalent,
A a la même signification que B ou représente un ion hydrogène, un ion ammonium ou un ion métallique mono-valent ou bivalent de préférence que Na, K et Zn.

**2.** Procédé selon la revendication 1,
caractérisé par le fait que l'acide aromatique hydroxydithiocarbonique ou son sel respectivement est utilisé en une quantité de 0,1 à 5,0 %.